# EUROPÄISCHE PATENTSCHRIFT

(11) **EP 0 609 661 B1**
(45) Veröffentlichungstag und Bekanntmachung des Hinweises auf die Patenterteilung: **03.09.1997**
(21) Anmeldenummer: 94100227.1
(22) Anmeldetag: 10.01.1994
(51) Int. Cl.: B65G 35/00, B24C 3/26

(54) **Vorrichtung zum kontinuierlichen Fördern und Drehen von Werkstücken**
Device for continuously transporting and tumbling workpieces
Dispositif pour transporter et retourner en continu des pièces à usiner

(30) Priorität: 03.02.1993 CH 320/93
(43) Veröffentlichungstag der Anmeldung: 10.08.1994
(73) Patentinhaber: Hunziker, Werner, CH-5054 Kirchleerau (CH)
(72) Erfinder: Hunziker, Werner, CH-5054 Kirchleerau (CH)
(74) Vertreter: Groner, Manfred, Dr.

(56) Entgegenhaltungen:
- DE-A- 2 035 557
- DE-A- 2 365 863
- DE-A- 4 013 913
- FR-A- 2 359 047

## Beschreibung

Die vorliegende Erfindung betrifft eine Vorrichtung gemäss dem Oberbegriff des Anspruchs 1.

Ein Muldenbandförderer dieser Art ist aus der US-A-4218854 bzw. FR-A-2359047 bekannt. Bei dieser bekannten Vorrichtung wird die Förderwirkung des umlaufenden Muldenbandes durch eine wendelartig mitlaufende Rippe erzielt. Dies hat zur Folge, dass der Förderwirkung nur solche Werkstücke unterworfen sind, die zwischen den Rippen liegen und von diesen vorwärts bewegt werden. Sind die Werkstücke zu gross, so, dass sie auf zwei benachbarten Rippen aufliegen, drehen sie sich an Ort, ohne im Muldenbandförderer weiter transportiert zu werden. Eine Anpassung des Rippenabstandes an die Grösse der Werkstücke ist nur begrenzt möglich. Die DE-A-2365863 zeigt eine Vorrichtung zum Fördern eines Metallrohres, bei der ein Band auf einer endlosen Umlaufbahn einen Wendelabschnitt durchläuft.

Aus den EP-A-205 738, 289 845 und 372 454 ist weiter eine Vorrichtung zum kontinuierlichen Fördern und Drehen von Werkstücken bekannt, die einen rohrförmigen, käfigartig gestalteten Mantel aufweist, dessen Enden mit rotierenden Ringscheiben verbunden sind. Diese Ringscheiben sind parallel zu einer senkrechten Bezugsebene orientiert, welche die Drehachse des Mantels spitzwinklig schneidet. Diese Vorrichtung ist in der Lage, kleine Werkstücke nur soweit als sie sich im Netzwerk des Mantels nicht verfangen sowie grosse Werkstücke zu fördern und zu drehen. Es tritt indessen gelegentlich die Gefahr ein, dass sie sich verklemmen und einen Rückstau im Produktionsfluss verursachen.

Die vorliegende Erfindung stellt sich die Aufgabe, eine Vorrichtung der eingangs erwähnten Art derart zu verbessern, dass die genannten Nachteile entfallen.

Erfindungsgemäss wird diese Aufgabe gelöst durch die kennzeichnenden Merkmale des Anspruchs 1.

Die Erfindung hat den Vorteil, dass sie hinsichtlich der Grösse der transportierbaren Teile ein wesentlich breiteres Spektrum erfasst als alle bisher bekannten Maschinen und im Aufbau zudem einfacher ist als die vorbekannten Maschinen.

Durch die Ausbildung nach Anspruch 2 wird die serielle Anordnung von zwei oder mehreren Muldenbandförderern wesentlich erleichtert, da der Ring des vorangehenden Muldenbandförderers beim anschliessenden die Kreisscheibe bildet, durch den die Werkstücke auf das tiefer liegende zweite Muldenband gleiten.

Anhand der beiliegenden schematischen Zeichnung wird die Erfindung beispielsweise erläutert. Es zeigen:
- Fig. 1: eine perspektivische Ansicht eines Muldenbandförderers für Kleinteile,
- Fig. 2: eine Draufsicht auf den Muldenbandförderer in Fig. 1,
- Fig. 3: eine Ansicht des Muldenbandförderers nach Fig. 2 in Richtung des Pfeiles III,
- Fig. 4: eine gleiche Darstellung wie Fig. 2 eines zweiten Ausführungsbeispiels eines Muldenbandförderers,
- Fig. 5: einen Schnitt längs der Lini V-V in Fig. 4 und
- Fig. 6: eine perspektivische Ansicht von drei seriell angeordneten Muldenbandförderern.

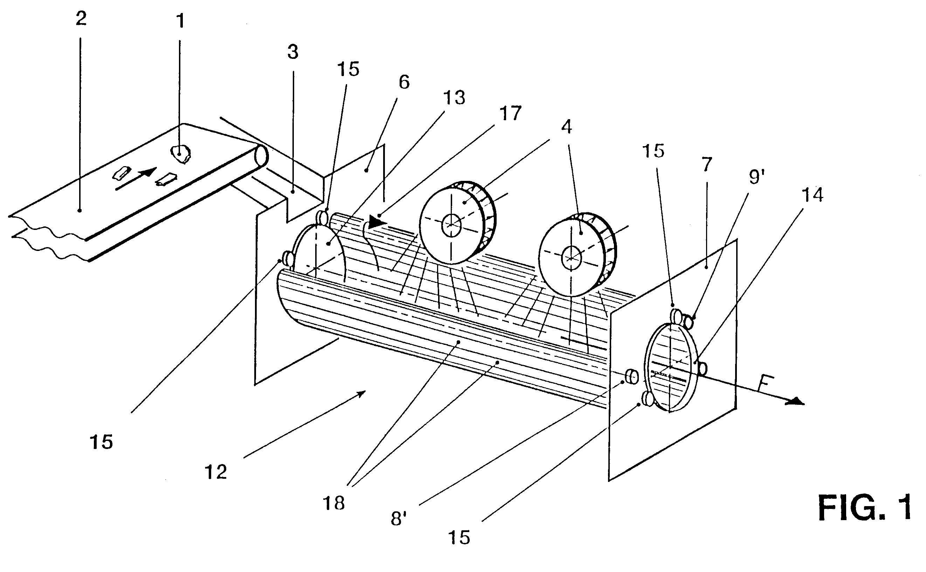

Fig. 1 zeigt eine anmeldungsgemässe Fördervorrichtung (nachfolgend Muldenbandförderer genannt), die dem Strahlen kleinerer Werkstücke 1 dient. Die Werkstücke 1 werden mittels eines Bandförderers 2 herangeführt, an eine Rutsche 3 übergeben, von der sie in den Muldenbandförderer gleiten. Auf diesem werden sie fortlaufend gedreht und in Förderrichtung (Pfeil F) transportiert. Über dem Muldenbandförderer sind ein oder mehrere, hier zwei Schleuderräder 4 angeordnet, deren Strahlkegel in die Mulde gerichtet sind und durch die sich die Werkstücke 1 drehend in Förderrichtung F hindurch bewegen. An den Muldenbandförderer kann eine nicht dargestellte Austragschleuse mit einer Rutsche oder Wendel anschliessen. Es kann aber auch ein zweiter Muldenbandförderer anschliessen, der die Aufgabe hat, in den Werkstücken 1 verbliebenes Strahlmittel auszutrommeln. Durch eingesetzte Vorhänge kann der zweite Muldenbandförderer auch als Schleuse dienen.

Endseits ist der Muldenbandförderer durch zwei plattenförmige Wangen 6, 7 begrenzt, die parallel zu einer Bezugsebene ausgerichtet sind. Diese Bezugsebene steht rechtwinklig auf eine Horizontalebene.

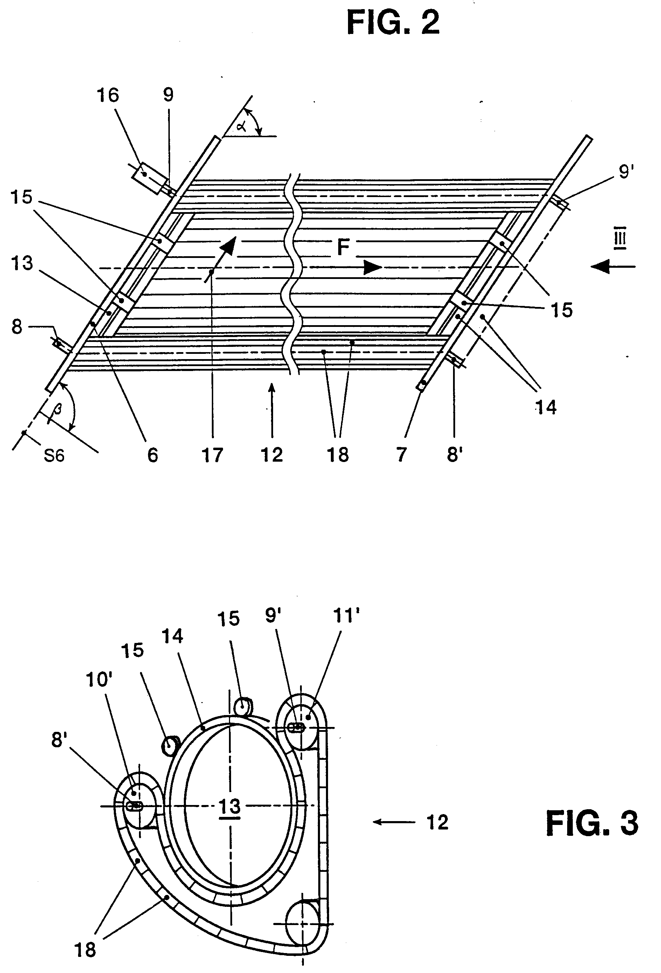

Ihre Spur S₆, das heisst ihre Schnittgerade mit der Horizontalebene bildet mit der Förderrichtung F einen spitzen Winkel α (Fig. 2). Die Wangen 6 und 7 sind durch nicht dargestellte Streben zu einem Maschinenständer verbunden. In der Zeichnung ist der Winkel α zur besseren Anschaulichkeit klein gezeichnet. Seine optimale Grösse dürfte in der Regel bei 80° liegen.

In den Wangen 6, 7 sind je zwei rechtwinklig zu ihnen orientierte Stummelwellen 8, 9 bzw. 8', 9' drehbar gelagert. Auf diesen sitzen drehfest auf den einander zugewandten Wangenseiten je eine Umlenkrolle 10, 11 bzw. 10', 11'. Über diese ist je der Endbereich eines endlosen, jalousieartig flexiblen Muldenbandes 12 geführt. Wie Fig. 3 zeigt kann unterhalb der Mulde, analog der Umlenkrollenpaare 10, 10' bzw. 11, 11', ein weiteres Umlenkrollenpaar angeordnet sein. Die Innenform der Mulde wird durch eine fliegende Kreisscheibe 13 bzw. einen fliegenden Ring 14 gleichen Aussendurchmessers bestimmt, die an den Enden der Mulde in der Ebene der Umlenkrollen 10, 11 bzw. 10', 11' gegen das Muldenband 12 einerseits und Stützrollen 15 anderseits abgestützt sind. Letztere sind frei drehbar in den Wangen 6, 7 gelagert.

Die Stummelwelle 9 und wie später noch erläutert auch die Stummelwelle 9' ist mit einem Antriebsmotor 16 versehen, der die Umlenkrolle 11 antreibt, so dass das Muldenband 12 in Richtung des Pfeiles 17 umläuft. Die Kreisscheibe 13 und der Ring 14 werden dabei vom Muldenband 12, das reibschlüssig an deren Umfang angreift, mitgenommen. Die vom Bandförderer 2 in die Mulde abgeworfenen Werkstücke 1 werden bei umlaufendem Muldenband 12 in Richtung des Pfeiles 17 mitgenommen. Im unter der Drehachse der Kreisscheibe 13 liegenden Bereich des Muldenbandes 12 führen dessen Stäbe 18 eine Bewegung in Förderrichtung F aus. Sobald die vom Muldenband 12 in Richtung des Pfeiles 17 mitgenommenen Werkstücke eine bestimmte Wegstrecke an der ansteigenden Flanke der Mulde hochbewegt sind, haben sie sich gleichzeitig ein Stück weit in Förderrichtung F bewegt. Wird die Muldenflanke zu steil, rollen sie sich rückwärts überschlagend zur Muldensohle zurück und werden von dort weg erneut mitgenommen. Dieser Vorgang wiederholt sich, bis die Werkstücke das Ende des Muldenbandförderers erreicht haben, wo sie durch den fliegenden Ring 14 ausgetragen werden. Der Ring 14 kann sich durch die Wange 7 hindurch erstrecken (in Fig. 2 strichpunktiert angedeutet) und bei einem anschliessenden Muldenbandförderer die Funktion der Kreisscheibe 13 ausüben.

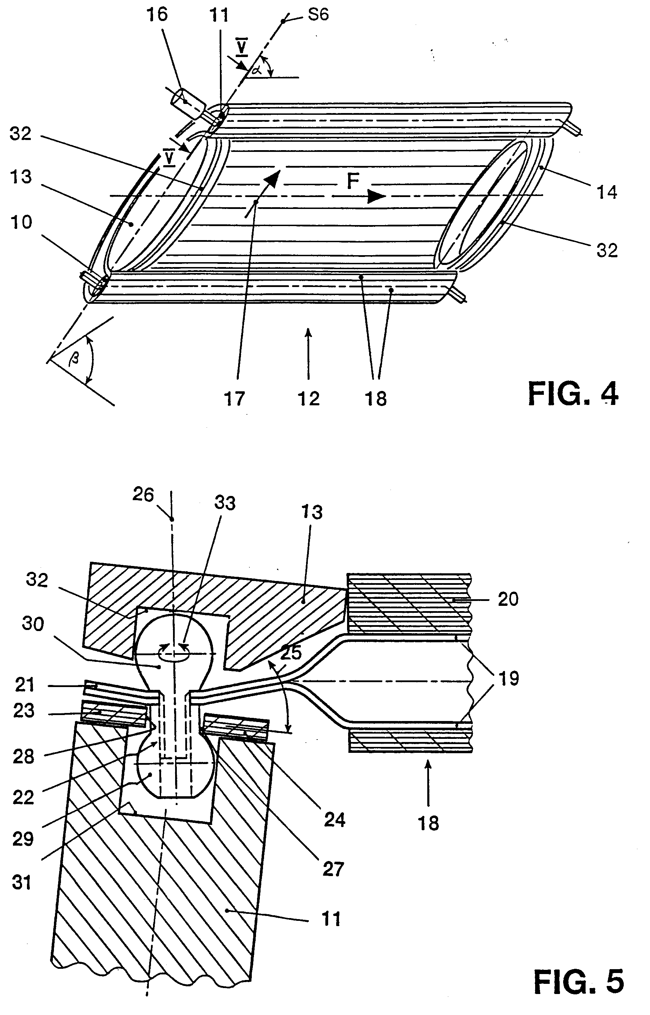

Eine Variante des beschriebenen Muldenbandförderers mit einer in Förderrichtung F grösseren Fördergeschwindigkeit zeigt Fig. 4. Die Wangen 6 und 7 sind zum besseren Verständnis weggelassen. Sie haben , wie beim vorherigen Beispiel dieselbe Bezugsebene S₆β wie die angrenzende Kreisscheibe 13 bzw. der angrenzende Ring 14, zu denen sie parallel orientiert ist. Die Bezugsebene ist auch in Fig. 4 durch ihre Spuren S₆, das heisst, durch ihre Schnittgerade mit einer Horizontalebene sowie durch ihren Steigungswinkel β charakterisiert. Der Steigungswinkel β ist bei diesem Ausführungsbeispiel kleiner als 90°. Die beiden nicht dargestellten Wangen sind somit (im Unterschied zu den Wangen 6, 7 des Beispiels nach Fig. 1 bis 3, welche senkrecht zu einer Horizontalebene stehen) gegen eine Horizontalebene geneigt. Mit zunehmender Neigung, das heisst mit kleiner werdendem Winkel β verschiebt sich der Bereich der grössten Fördergeschwindigkeit in Bewegungsrichtung (Pfeil 17) des Muldenbandes 12, das heisst, in jenen Bereich der Mulde, in dem sich die Werkstücke 1 bei umlaufenden Muldenband am meisten aufhalten.

Nachfolgend wird ein möglicher Aufbau eines Muldenbandes 12 erläutert, das sich sowohl für den Einsatz in einem Muldenbandförderer gemäss Fig. 1 bis 3 als auch in einem solchen nach Fig. 4 eignet.

Das Muldenband 12 weist eine Vielzahl zur Förderrichtung F paralleler Stäbe 18 auf, die gelenkig miteinander verbunden und die voneinander so weit distanziert bzw. im Querschnitt so gestaltet sind, dass sich das umlaufende Muldenband den Krümmungen der Umlenkrollen 10, 10', 11, 11' sowie der Kreisscheibe 13 und des Ringes 14 zwanglos anpassen kann. Anderseits sind der gegenseitige Abstand der Stäbe 18 und ihre Querschnittsgestaltung so zu wählen, dass auch die kleinsten der im Muldenbandförderer zu verarbeitenden Werkstücke in der Mulde nicht zwischen den Stäben 18 hindurchfallen oder sich dazwischen versperren können.

Jeder der Stäbe 18 weist einen Hohlkern 19 aus Metall auf, auf den ein Mantel 20 aus Gummi, Kunststoff oder Manganstahl als Abrasionsschutz aufgeschoben ist. Der Mantel 18 endet mit Abstand vor den beiden Stabenden. Die Mäntel 20 der Stäbe 18 bilden somit eine das Muldenband umgebende Abrasionsschutzschicht. Die Stäbe können aber auch einstückig aus abrasionsfestem Material gefertigt sein. Wird der Muldenbandförderer für andere Oberflächenbehandlungszwecke als Strahlen eingesetzt, können die Stäbe 18 auch entsprechend anders gestaltet sein.

Die Enden der Hohlkerne 19 sind zu flachen Endstücken 21 ausgeformt. Ein Führungskörper 22 verbindet das Endstück 21 beweglich mit einem endlosen Riemen 23, der aus gewebearmiertem Kunststoff, Gummi oder dgl. bestehen kann. Je nach Einsatz des Muldenbandförderers kann auch anstelle des Riemens 23 auch ein Stahlband oder eine Kette zweckmässig sein.

Der Riemen 23 umschlingt teilweise die zylindrische Umfangfläche 24 der Umlenkrolle 11 (und analog die entsprechenden Umfangflächen der Umlenkrollen 11' bzw. 10 und 10'). Die Verbindung des Stabes 18 mit dem Riemen 23 muss für den Stab 18 eine solche Beweglichkeit gewährleisten, dass der Stab 18 um den Riemen 23 und somit um eine zum Riemen 23 parallele erste Schwenkachse in Richtung des Doppelpfeiles 25 eine Schwenkbewegung ausführen kann. Die Freiheit für die Schwenkbewegung muss umso grösser sein, je kleiner die Steigung (Winkel β) der Ebene S₆β oder je kleiner der Winkel α ist. Die Verbindung zwischen dem Stab 18 und dem Riemen 23 muss aber auch eine zweite Schwenkbewegung um eine Schwenkachse 26 (Doppelpfeil 33) ermöglichen, die quer zur ersten Schwenkachse orientiert ist. Der Schwenkweg des Stabes 18 um die Achse 26 muss umso grösser sein, je kleiner der Schrägstellungswinkel α der Wangen 6, 7 bzw. der Ebene S₆β zur Förderrichtung F ist. Für diese Beweglichkeit des Stabes 18 ist der Verbindungskörper 22 mit zureichendem Spiel 27 formschlüssig in einem, vorzugsweise mit einer Hülse verschleissfest ausgefütterten Loch 28 des Riemens 23 gehalten. Zudem weist der Verbindungskörper 22 zu beiden Seiten des Riemens 23 je einen Kugelkopf 29 bzw. 30 auf. Die Kugelköpfe 29, 30 liegen formschlüssig und mit für die Schwenkbewegung zureichendem Spiel in peripheren Vertiefungen 31, 32. Diese Vertiefungen 31, 32 hindern die Stäbe 18 im Bereich der Umlenkrollen 10, 10', 11, 11' sowie der Kreisscheibe 13 und des Ringes 14 an einer Längsverschiebung und zwingen sie auf die schiefe Umlaufbahn des Muldenbandes. Die Vertiefungen 32 der Kreisscheibe 13 und des Ringes 14 sind durchgehende periphere Ringnuten. Gleich sind die Vertiefungen 31 der Umlenkrollen 10 und 10' ausgebildet.

Bei den beiden durch eine getriebliche Verbindung zum Gleichlauf gezwungenen Umlenkrollen 11, 11' dagegen besteht die Vertiefung 32 aus gleichmässig über den Umfang verteilten radialen Bohrungen, welche nach Zahnradart mit den Kugelköpfen 30 kämmen.

Ist die Umlenkrolle 11 vom Motor 16 angetrieben, dreht die damit getrieblich verbundene Umlenkrolle 11' zwangsweise im Gleichlauf mit. Durch die Verzahnung dieser Umlenkrollen 11, 11' mit den Kugelköpfen 30 wird das Muldenband an beiden Enden schlupffrei angetrieben. Ein übereinstimmender, schlupffreier Antrieb an beiden Enden des Muldenbandes ist zweckmässig, weil ein an einem Bandende auftretender Schlupf das Band verklemmen und zerstören könnte.

Die peripheren Flächen der Kreisscheibe 13 und des Ringes 14 sind keilförmig gegen die Ringnut 32 verjüngt. Die Verjüngung muss so stark sein, dass für die Schwenkbewegung des Endstückes 21 um den Riemen 23 (Doppelpfeil 25) genügend Freiraum besteht.

Das Muldenband 12 kann auch anders ausgebildet sein. Wesentlich ist, dass die Enden seiner Stäbe 18 relativ zur Kreisscheibe 13, zum Ring 14 und zu den Umlenkrollen 10, 10', 11, 11' um zwei zueinander rechtwinklig verlaufende Achsen verschwenkbar sind.

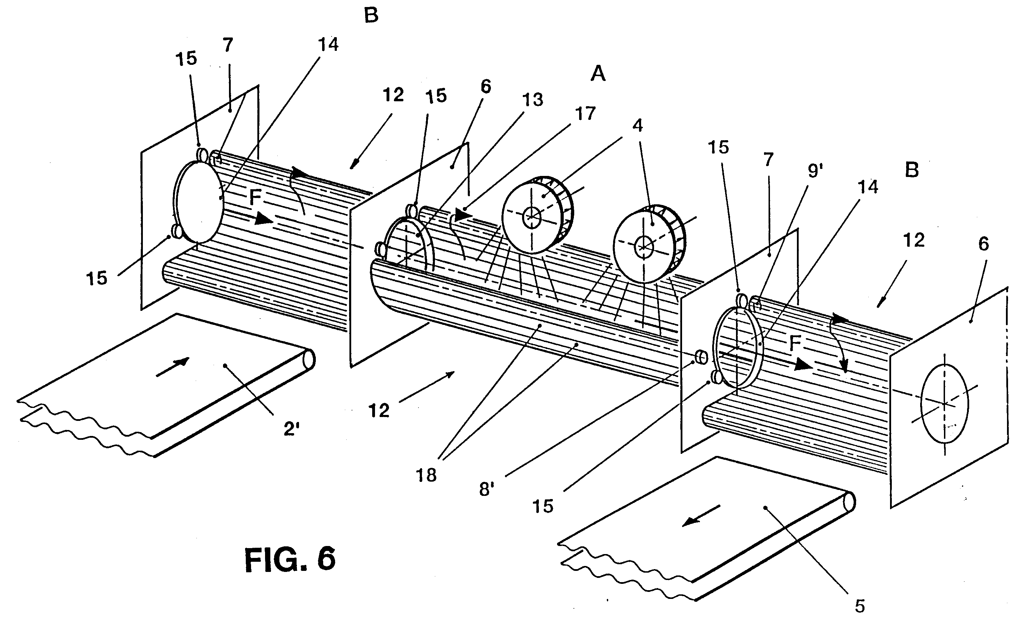

Fig. 6 zeigt drei Muldenbandförderer A, B der beschriebenen Art in serieller Anordnung. Ihre Wangen 6, 7 können sowohl im Winkel α zur Förderrichtung F als auch im Winkel β zur Horizontalen geneigt sein.

Die Muldenbandförderer A und B sind gleich aufgebaut wie der mit Bezug auf die Fig. 1 bis 5 beschriebene mit dem unwesentlichen Unterschied, dass beim Muldenbandförderer A die nähere Flanke gegen den Betrachter stark ansteigend ist, wogegen diese bei den Muldenbandförderern B horizontal oder nur leicht ansteigend verläuft.

Diese Anordnung dient sowohl dem Strahlen kleiner und grosser Werkstücke 1. Die Werkstücke werden mittels eines Bandförderers 2' herangeführt und direkt oder über eine Rutsche an die sich gleichsinnig bewegende horizontale Flanke des Muldenbandes 12 übergeben. Auf dieser werden die Werkstücke gegen die steil ansteigende Flanke des Muldenbandes 12 transportiert und dort fortlaufend nach rückwärts überrollend gedreht und gleichzeitig in Förderrichtung (Pfeil F) durch den Muldenbandförderer B zum Muldenbandförderer A transportiert. Über dem Muldenbandförderer A sind ein oder mehrere Schleuderräder 4 angeordnet, deren Strahlkegel in dessen Mulde gerichtet sind und durch die sich die Werkstücke 1 drehend in Förderrichtung F hindurch bewegen.

An den zweiten Muldenbandförderer A schliesst ein dritter Muldenbandförderer B an, der gleich wie der erste ausgebildet ist. Dessen im wesentlichen horizontale Muldenflanke grenzt an einen endlosbandartigen Abtransportförderer 5, an den Werkstücke durch eine periodische Drehrichtungsänderung des Muldenbandes 12 übergeben werden können.

Werden mehrere Muldenbandförderer A, B als Halbmulde (B) oder in U-Form (A) seriell aneinander gekoppelt, haben sie gemeinsame Lagerstellen und benötigen im Normalfalle nur einen Antrieb, sei es auf der Einlaufseite oder auf der Auslaufseite.

Diese serielle Anordnung der Muldenbandförderer A, B gewährleistet, dass auch sperrige Stücke, wie zum Beispiel Zylinderköpfe, immer um ihre in Förderrichtung F orientierte Achse drehend in den Wirkbereich der Strahlkegel eintreten. Damit wird bei allen Werkstücken ein hochwertiges Strahlbild erreicht, weil ein zu spätes oder unregelmässiges Eintreten dieser Drehbewegung im Wirkbereich der Strahlkegel starke Unterschiede im Strahlbild erzeugt. Durch die Erfindung wird dieses Problem in einfachster Weise gelöst. Insbesondere für das Strahlen schwerer oder sperriger Werkstücke wird dem eigentlichen Strahl-Muldenbandförderer A eine Einlaufpartie in Form einer Halbmulde B mit flachem Einlauf vorgesetzt. Die durch den quer zur Förderrichtung angeordneten Bandförderer 2' angelieferten Werkstücke gelangen ohne Gefälle auf die horizontale Flanke der Halbmulde und gehen ohne weitere Hilfe in die rotierende und vorwärtslaufende Bewegung über.

Ist ein auslaufseitiger Austrag durch den Ring 14 ungünstig (sehr lange und sehr schwere Teile), lässt sich ein seitlicher Austrag mit dem gleichen Muldenbandförderer B mit Halbmulde, wie beim Einlauf realisieren. Die Abgabe erfolgt dann auf ein Band 5, das parallel zum Einlauf 21 steht. Bei dieser Variante muss der Auslauf-Muldenbandförderer B antriebsmässig unabhängig sein und die Anwesenheit von Werkstücken muss darin mit Sensoren überwacht werden.

## Patentansprüche

1. Vorrichtung zum geradlinigen Fördern von Körpern (1) mit einem antreibbaren, endlosen, biegsamen Muldenband (12), das eine Vielzahl in Förderrichtung (F) paralleler und gelenkig verbundener Stäbe (18) aufweist und dessen Enden zur Bildung der Mulde je um eine zu einer Bezugsebene (S₆β) parallele Kreisscheibe (13) oder einen Ring (14) geführt sind, dadurch gekennzeichnet, dass die Bezugsebene (S₆β) mit einer horizontalen Ebene eine zur Förderrichtung (F) geneigte (Winkel α) Schnittgerade (S₆) bildet, und dass die Enden des Muldenbandes derart an der Kreisscheibe (13) bzw. dem Ring (14) geführt sind, dass die Stäbe (18) auf ihrer Umlaufbahn um eine zur Umlaufbahn parallele, erste Schwenkachse schwenkbar sind, und dass die Enden der Stäbe (18) zusätzlich um eine zur ersten Schwenkachse rechtwinklige, zweite Schwenkachse (26) schwenkbar sind.

2. Vorrichtung nach Anspruch 1, dadurch gekennzeichnet, dass das Muldenband (12) nebst den Kreisscheiben (13) oder Ringen (14) an zu diesen achsparallelen Umlenkrollen (10, 10', 11, 11') geführt bzw. gelagert sind.

3. Vorrichtung nach Anspruch 1 oder 2, dadurch gekennzeichnet, dass die Bezugsebene (S₆β) eine Horizontalebene unter einem spitzen Winkel (β) schneidet.

4. Vorrichtung nach einem der Ansprüche 1 bis 3, dadurch gekennzeichnet, dass das Muldenband (12) an seinen Enden je einen endlosen Strang (23) aufweist, und dass die Enden der Stäbe (18) um wenigstens die erste der beiden Schwenkachsen schwenkbar am Strang (23) befestigt sind.

5. Vorrichtung nach einem der Ansprüche 1 bis 4, dadurch gekennzeichnet, dass die Enden der Stäbe (18) im Bereich der Kreisscheibe (13) und des Ringes (14) sowie der Umlenkrollen (10, 10', 11, 11') gegen eine Verschiebung in Längsrichtung gesichert sind.

6. Vorrichtung nach Anspruch 5, dadurch gekennzeichnet, dass die Enden der Stäbe (18) durch die Kreisscheibe (13) und den Ring (14) sowie die Umlenkrollen (10, 10', 11, 11') formschlüssig und mit Spiel in Stablängsrichtung gehalten sind.

7. Vorrichtung nach einem der Ansprüche 1 bis 6, dadurch gekennzeichnet, dass die Enden des Muldenbandes (12) je mit einer Umlenkrolle (11, 11') formschlüssig kämmen, und dass die beiden Umlenkrollen (11, 11') synchron im Gleichlauf angetrieben sind.

8. Vorrichtung nach einem der Ansprüche 5 bis 7, dadurch gekennzeichnet, dass die Enden der Stäbe (18) beidseits Vorsprünge (29, 30) aufweisen, die in Vertiefungen (31, 32) an den Umfangflächen der Kreisscheibe (13) bzw. des Ringes (14) und der Umlenkrollen (10, 10', 11, 11') greifen.

9. Vorrichtung nach Anspruch 8, dadurch gekennzeichnet, dass die Vertiefungen (31) der mit Gleichlauf angetriebenen Umlenkrollen (11, 11') als mit den Vorsprüngen (29) kämmende Bohrungen ausgebildet sind, und dass die Vertiefungen (31, 32) an der Kreisscheibe (13) bzw. dem Ring (14) und den übrigen Umlenkrollen (10, 10') Ringnuten sind.

10. Vorrichtung nach Anspruch 9, dadurch gekennzeichnet, dass die Vorsprünge (29, 30) kugelkopfförmig ausgebildet sind.

11. Vorrichtung nach einem der Ansprüche 1 bis 10, dadurch gekennzeichnet, dass über der Mulde Schleuderräder (4) oder Strahldüsen angeordnet sind, deren Strahlkegel in die Mulde gerichtet ist.

12. Vorrichtung nach einem der Ansprüche 1 bis 11, dadurch gekennzeichnet, dass die in Umlaufrichtung (17) vorangehende der Mulde Flanke näherungsweise horizontal ausgerichtet ist.

## Claims

1. A device for the rectilinear conveying of bodies (1), having an endless, flexible troughed belt (12) which can be driven, which comprises a multiplicity of rods (18) which are parallel in the direction of conveying (F) and are attached articulated to each other, and the ends of which troughed belt are each led round a circular disc (13) or ring (14) parallel to the reference plane (S₆β) to form the trough, characterised in that the reference plane (S₆β) forms a line of intersection (S₆) with a horizontal plane, which line of intersection is inclined (angle α) in relation to the direction of conveying (F), and that the ends of the troughed belt are guided on the circular disc (13) or ring (14) in such a way that the rods (18) can swivel, on their path of circulation, about a first swivelling axis parallel to the path of circulation, and that the ends of the rods (18) can swivel in addition about a second swivelling axis (26) at right angles to the first swivelling axis.

2. A device according to claim 1, characterised in that the troughed belt (12) together with the circular discs (13) or rings (14) is guided or mounted on deflection rollers (10, 10', 11, 11') axially parallel to the circular discs or rings.

3. A device according to claim 1 or 2, characterised in that the reference plane (S₆β) intersects a horizontal plane at an acute angle (β).

4. A device according to any one of claims 1 to 3, characterised in that the troughed belt (12) comprises an endless length (23) at each of its ends, and that the ends of the rods (18) are fixed to the length (23) so that they can swivel about at least the first of the two swivelling axes.

5. A device according to any one of claims 1 to 4, characterised in that the ends of the rods (18) are secured against displacement in the longitudinal direction in the region of the circular disc (13) and of the ring (14) and of the deflection rollers (10, 10', 11, 11').

6. A device according to claim 5, characterised in that the ends of the rods (18) are positively held, with play in the longitudinal direction of the rods, by the circular disc (13) and the ring (14) and by the deflection rollers (10, 10', 11, 11').

7. A device according to any one of claims 1 to 6, characterised in that the ends of the troughed belt (12) each engage positively with a deflection roller (11, 11'), and that the two deflection rollers (11, 11') are driven synchronously in the same direction.

8. A device according to any one of claims 5 to 7, characterised in that the ends of the rods (18) have projections (29, 30) on both sides which engage in recesses (31, 32) on the peripheral faces of the circular disc (13) or of the ring (14) and of the deflection rollers (10, 10', 11, 11').

9. A device according to claim 8, characterised in that the recesses (31) of the deflection rollers (10, 10') which are driven in the same direction are constructed as bores which engage with the projections (29), and that the recesses (31, 32) on the circular disc (13) or the ring (14) and on the other deflection rollers (10, 10') are annular grooves.

10. A device according to claim 9, characterised in that the projections (29, 30) are constructed in the form of spherical heads.

11. A device according to any one of claims 1 to 10, characterised in that slinger wheels (4) or jet blast nozzles are disposed above the trough, the jet cone of which is directed into the trough.

12. A device according to any one of claims 1 to 11, characterised in that the side of the trough which is in front in the direction of circulation (17) is aligned approximately horizontally.

## Revendications

1. Dispositif pour transporter en ligne droite des objets (1), comportant une bande en auge, sans fin, flexible et pouvant être entraînée, constituée d'une pluralité de barres (18) parallèles à la direction d'avancement (F) des objets et reliées par des articulations, les extrémités de ces barres, pour former l'auge, se déplaçant le long d'un disque circulaire (13) ou un anneau (14) parallèle à un plan de référence (S₆ β),
caractérisé en ce que
le plan de référence (S₆ β) coupe un plan horizontal selon une droite (S₆) faisant un angle α avec la direction d'avancement, les extrémités de la bande en auge étant guidées le long du disque circulaire (13) et de l'anneau (14) respectivement de manière que chaque barre (18) en mouvement peut pivoter autour d'un premier axe de basculement parallèle à la piste de circulation, les extrémités de ces barres pouvant basculer en plus autour d'un second axe (26) perpendiculaire au premier.

2. Dispositif selon la revendication 1,
caractérisé en ce que
la bande en auge (12) en plus des disques circulaires (13) ou des anneaux (14), a son guidage ou montage assuré par des galets de renvoi (10, 10' ; 11, 11') d'axes parallèles à ceux des précédents.

3. Dispositif selon la revendication 1 ou 2,
caractérisé en ce que
le plan de référence (S₆ β) coupe un plan horizontal sous un angle aigu (β).

4. Dispositif selon une des revendications 1 à 3,
caractérisé en ce que
la bande en auge présente à chacune de ses extrémités une corde sans fin (23), les extrémités des barres (18) étant fixées de manière à pouvoir basculer sur la corde (23) au moins autour du premier des deux axes de basculement.

5. Dispositif selon une des revendications 1 à 4,
caractérisé en ce que
les extrémités des barres (18), dans la zone du disque circulaire (13) de l'anneau (14) et des galets de renvoi (10, 10', 11, 11') sont garanties contre un coulissement en direction longitudinale.

6. Dispositif selon la revendication 5,
caractérisé en ce que
les extrémités des barres (18) sont maintenues par le disque circulaire (13), l'anneau (14) et les galets de renvoi (10, 10' ; 11, 11'), par combinaison de formes mais avec du jeu selon la direction longitudinale des barres.

7. Dispositif selon une des revendications 1 à 6,
caractérisé en ce que
les extrémités de la bande en auge (12) sont engrenées chacune, par combinaison de formes, avec un galet de renvoi (11, 11'), ces deux galets tournant en synchronisme dans le même sens.

8. Dispositif selon une des revendications 5 à 7,
caractérisé en ce que
les extrémités des barres (18) présentent chacune, des deux côtés, des parties en saillie (29, 30) qui sont en prise dans des parties en creux (31, 32) pratiquées dans les surfaces périphériques du disque circulaire (13), de l'anneau (14) et des galets de renvoi (10, 10' ; 11, 11').

9. Dispositif selon la revendication 8,
caractérisé en ce que
les parties en creux (31) que présentent les galets (11, 11') tournant en synchronisme sont constituées par des perçages engrenant avec les parties en saillie (29), ces parties en creux (31, 32) formant des gorges circulaires le long du disque (13), de l'anneau (14) et des disques de renvoi (10, 10').

10. Dispositif selon la revendication 9,
caractérisé en ce que
les parties en saillie (29, 30) ont la forme de têtes sphériques.

11. Dispositif selon une des revendications 1 à 10,
caractérisé en ce qu'
au-dessus de l'auge se trouvent des roues d'éclusage (4) ou des tuyères dont les cônes de projection sont dirigés vers l'auge.

12. Dispositif selon une des revendications 1 à 11,
caractérisé en ce que
la partie de l'auge, située en avant par rapport au sens de déplacement périphérique (17), est disposée à peu près à l'horizontale.
